(19) Europäisches Patentamt
European Patent Office
Office européen des brevets

(11) Publication number: **0 145 426 A2**

# (12) EUROPEAN PATENT APPLICATION

(21) Application number: **84308356.9**

(22) Date of filing: **30.11.84**

(51) Int. Cl.⁴: **C 08 J 5/18**, C 08 J 5/22, B 29 C 55/02

(30) Priority: **06.12.83 US 558513**

(43) Date of publication of application: **19.06.85 Bulletin 85/25**

(84) Designated Contracting States: **BE DE FR GB IT NL**

(71) Applicant: **E.I. DU PONT DE NEMOURS AND COMPANY, 1007 Market Street, Wilmington Delaware 19898 (US)**

(72) Inventor: **Grot, Walther Gustav, R.D. 1, Chadds Ford Pennsylvania 19317 (US)**

(74) Representative: **Myerscough, Philip Boyd et al, J.A.Kemp & Co. 14, South Square Gray's Inn, London, WC1R 5EU (GB)**

(54) **Process for making oriented film of fluorinated polymer.**

(57) A process for making oriented film of perfluorinated polymer which is either an ion exchange polymer or a melt-fabricable precursor thereto, which has been extended in the range of about 1.3X to 3X in at least one planar direction, is disclosed. Such film is made by swelling a film in melt-fabricable form in a liquid organic compound and either restraining it while drying, or stretching it followed by drying under restraint. The oriented melt-fabricable film can be converted to ion-exchange film by hydrolysis under restraint. The resulting film has good anion rejection properties, strength and flatness, and remains taut in use after being mounted dry in a chloralkali cell.

EP 0 145 426 A2

"PROCESS FOR MAKING ORIENTED FILM OF FLUORINATED POLYMER"

Fluorinated ion exchange polymers having carboxylic acid and/or sulfonic acid functional groups or salts thereof are known in the art. One principal use of such a polymer is as a component of a membrane used to separate the anode and cathode compartments of a chloralkali electrolysis cell. Such membrane can be in the form of an unreinforced film or laminar structure.

It is desirable for use in a chloralkali cell that a membrane provide for operation at low voltage and high current efficiency, and thereby at low power consumption, so as to provide products of high purity at low cost, especially membrane in view of today's high cost of energy. Such membrane should also have sufficient toughness and tear strength to resist damage during installation and use in cells of industrial size.

Briefly, according to the invention, there is provided a process for making an oriented film of perfluorinated polymer, which is either an ion exchange polymer or a melt fabricable precursor thereto, which has been extended in the range of 1.3X to 3X in at least one planar direction.

It is known to stretch membranes monoaxially or biaxially and later to hydrolyse the stretched membranes to provide cation exchange membranes. In EP-A-86595 and EP-A-86596, mechanical stretching is done at elevated temperatures to avoid tearing the membrane. Other prior art avoids mechanical biaxial stretching, with its expensive equipment and need for delicate temperature control, by swelling a membrane in selected solvents, and then drying them while restrained. JP-A-119348/83 uses aqueous solutions or alcohols as swelling agents. JP-A-163446/83 uses monohydric, dihydric or trihydric alcohols, ethers, nitriles or water, but the maximum degree of swelling was only 20 percent. Both of these documents describe the use of membranes in the hydrolysed or cation exchange form, in which

the cation exchange groups are present as ions.

According to a first aspect of the invention there is provided a process for making an oriented film of at least one perfluorinated polymer which has $-SO_2X$ and/or $-COOY$ functional groups, where X is F, Cl or OM; Y is R or M; M is H, Na, K or $NQ_4$, each Q separately is H or $C_1$ to $C_4$ alkyl; and R is $C_1$ to $C_4$ alkyl, and which has an equivalent weight of 670 to 1500, said film having been simultaneously extended 1.3X to 2X in each of two mutually perpendicular directions, said process comprising (a) swelling a first film of at least one perfluorinated polymer which has $-SO_2X'$ and/or $-COOR$ functional groups, where X' is F or Cl and R is as hereinbefore defined, by contacting said first film with a liquid organic compound having a boiling point of $20^{\circ}$ to $300^{\circ}C$, consisting of C and F, or of C, F and at least one of Cl, H, O, S and N, the sum of the number of Cl and H atoms being no greater than the number of F atoms, until said first film has been extended in the range of 1.3X to 2X in each of two mutually perpendicular planar directions, (b) removing said organic liquid from the resulting liquid-swollen film while restraining the film from shrinking in said planar directions, and optionally (c) hydrolyzing the $-SO_2X'$ and/or $-COOR$ functional groups to $-SO_3M$ and/or $-COOM$ functional groups, wherein M is as hereinbefore defined, while restraining the film from shrinking in said planar directions.

In a second aspect the invention provides a process for making an oriented film of at least one perfluorinated polymer which has $-SO_2X$ and/or $-COOY$ functional groups, where X is F, Cl or OM; Y is R or M; M is H, Na, K or $NQ_4$, each Q separately is H or $C_1$ to $C_4$ alkyl; and R is $C_1$ to $C_4$ alkyl, and which has an equivalent weight of 600 to 1500, said film having been extended 1.3X to 3X in at least one planar direction, said process comprising (a) swelling a first film of at least one perfluorinated polymer which has $-SO_2X'$

and/or -COOR functional groups, where X' is F or Cl and R is as hereinbefore defined and an equivalent weight of 600 to 1500, by soaking said film in a liquid organic compound as defined for the first aspect (b) stretching the resulting liquid-swollen film in at least one planar direction, the extension of said first film in said at least one planar direction in steps (a) and (b) taken together being 1.3X to 3X, (c) removing said organic liquid from said liquid-swollen and stretched film while restraining the film from shrinking in said at least one planar direction and optionally (d) hydrolyzing the $-SO_2X'$ and/or -COOR functional groups to $-SO_3M$ and/or -COOM functional groups, wherein M is as hereinbefore defined, while restraining the film from shrinking in said planar directions.

The term "film", as employed herein, is intended to embrace not only a film of a single polymer, i.e., of uniform composition, but also films having two or more layers of different polymers, e.g. layers of both carboxylate polymer and sulfonate polymer, film having layers of polymer of differing equivalent weight, and film wherein a surface has been modified, e.g. a film of sulfonate polymer which has been modified on a surface to convert side chains with sulfonate groups to side chains with carboxylate groups.

The membrane used in the process of the present invention is typically prepared from fluorinated polymer which has -COOR or $-SO_2X$ functional groups, where R is lower alkyl and X is F or Cl.

The polymers used in the process of the invention are of types known in the art. These include fluorinated polymers with pendant side chains containing sulfonic acid or carboxylic acid groups or their derivatives.

The carboxylic polymers with which the present invention is concerned have a fluorinated hydrocarbon backbone chain to which are attached the functional groups or pendant side chains which in turn carry the functional groups. When the

polymer is in melt-fabricable form, the pendant side chains can contain, for example,

$$-\left(\underset{Z}{CF}\right)_t-W$$

groups wherein Z is F, $CF_3$ or $CF_2Cl$, preferably F, t is 1 to 12, and W is -COOR or -CN, wherein R is lower alkyl. Preferably, the functional group in the side chains of the polymer will be present in terminal $-O\left(\underset{Z}{CF}\right)_t-W$ groups wherein t is 1 to 3.

By "fluorinated polymer" is meant a polymer in which, after loss of any R group by hydrolysis to ion exchange form, the number of F atoms is at least 90% of the total number of F, Cl and H atoms in the polymer. For chloralkali cells, perfluorinated polymers are preferred, though the R in any COOR group need not be fluorinated because it is lost during hydrolysis.

Polymers containing $-(OCF_2\underset{CF_3}{CF})_mOCF_2\underset{CF_3}{CF}CN$ side chains, in which m is 0, 1, 2, 3 or 4, are disclosed in US-A-3,852,326.

Polymers containing $-(CF_2)_nCOOR$ side chains, where n is 1 to 18, are disclosed in US-A-3,506,635.

Polymers containing $-(OCF_2\underset{Z}{CF})_mOCF_2COOR$ side chains, where Z and R have the meaning defined above and m is 0, 1 or 2 (preferably 1) are disclosed in US-A-4,267,364.

Polymers containing terminal $-O(CF_2)_vW$ groups, where W is as defined above and v is from 2 to 12, are preferred. They are disclosed in US-A-3,641,104, US-A-4,178,218, US-A-4,116,888, GB-A-2,053,902 and GB-A-1,518,387. These groups may be part of $-(OCF_2\underset{V}{CF})_mO(CF_2)_vW$ side chains, where V is F, $CF_3$ or $CF_2Cl$. Especially preferred are polymers containing such side chains where v is 2, which are described

in US-A-4,138,426 and S. Afr. 78/002225, and where v is 3, which are described in US-A-4,065,366. Among these polymers, those with m=1 and $V-CF_3$ are most preferred. Polymers with side chains wherein X is $CF_2Cl$ are disclosed in EP-A-41737.

The above references describe how to make these polymers.

The sulfonyl polymers with which the present invention is concerned are fluorinated polymers with side chains containing the group $-CF_2\underset{Q}{\underset{|}{C}}FSO_2X$, wherein Q is F, Cl, a $C_1$ to $C_{10}$ perfluoroalkyl radical, or $CF_2Cl$, and X is F or Cl, preferably F. Ordinarily, the side chains will contain $-OCF_2CF_2CF_2SO_2X$ or $-OCF_2CF_2SO_2F$ groups, preferably the latter. The term "fluorinated polymer" carries the same meaning as employed above in reference to carboxylate polymers. For use in chloralkali membranes, perfluorinated copolymers are preferred.

Polymers containing the side chain $-O(CF_2\underset{CF_3}{\underset{|}{C}}FO)_k(CF_2)_j-SO_2F$, where k is 0 or 1 and j is 3, 4 or 5, may be used. These are described in GB-A-2,053,902.

Polymers containing the side chain $-CF_2CF_2SO_2X$ are described in US-A-3,718,627.

Preferred polymers contain the side chain $-(OCF_2\underset{Y}{\underset{|}{C}}F)_r-OCF_2\underset{R_f}{\underset{|}{C}}FSO_2X$, where X is as defined above, Y is F or $CF_3$, r is 1, 2 or 3, and $R_f$ is F, Cl or a $C_1$ to $C_{10}$ perfluoroalkyl radical, most preferably F, and are described in US-A-3,282,875. Especially preferred are copolymers containing the side chain $-OCF_2\underset{CF_3}{\underset{|}{C}}FOCF_2CF_2SO_2F$.

Polymerization can be carried out by the methods described in the above references. Especially useful is solution polymerization using $ClF_2CCFCl_2$ solvent and $(CF_3CF_2COO)_2$ initiator. Polymerization can also be carried

out by aqueous granular polymerization as in US-A-2,393,967, or aqueous dispersion polymerization as in US-A-2,559,752 followed by coagulation as in US-A-2,593,583.

The copolymers used in the layers described herein should be of high enough molecular weight to produce films which are self-supporting in both the melt-fabricable precursor form and in the hydrolyzed ion exchange form.

In addition to using separate films of the above-identified polymers, it is also possible to use a laminar film of two or more layers in making the membrane. For example, a film having a layer of a copolymer having sulfonyl groups in melt-fabricable form and a layer of a copolymer having carboxyl groups in melt-fabricable form, such as made by coextrusion, can be used in making the membrane of the invention.

When used as a component of a membrane to separate the anode and cathode compartments of an electrolysis cell, such as a chloralkali cell, the sulfonate polymers dealt with herein, after conversion to ionizable form, should have an equivalent weight in the range of 600 to 1500. Above 1500 the electrical resistivity becomes too high, and below 600 the mechanical and electrochemical properties are poor because of excessive swelling of the polymer. Preferably the equivalent weight is at least 900. Also, for most purposes, and for layers of such polymer of customary thickness, a value no greater than about 1400 is preferred.

For the carboxylate polymers dealt with herein, when used as a component of a membrane to separate the compartments of a chloralkali cell, the requirements thereof differ from those of the sulfonate polymers. The carboxylate polymer should have an equivalent weight in the range of 670 to 1500. A value below 1250 is preferred, so as to have lower resistance. Additionally, a value of at least 770 is preferred, so as to have good mechanical properties.

The multilayer membranes of the invention are prepared

from component polymer films which have a thickness ranging from as low as about 13 µm (0.5 mil) up to about 150 µm (6 mils). As a multilayer membrane will generally be prepared from two or three such polymer films, the total thickness of polymer films used in making the resulting membrane will generally lie in the range of 50 to 250 µm (2 to 10 mils), preferably 75 to 200 µm (3 to 8 mils), most preferably 75 to 150 µm (3 to 6 mils).

The customary way to specify the structural composition of films or membranes in this field of art is to specify the polymer composition, equivalent weight and thickness of the polymer films in melt-fabricable form, and the type of reinforcing fabric, from which the membrane is fabricated. This is done, in the case of both the immediate product membrane of the lamination procedure and the hydrolyzed ion-exchange membrane made therefrom, because (1) the thickness of a fabric-reinforced membrane is not uniform, being thicker at the cross-over points of the reinforcing fabric and thinner elsewhere, and measurement made by calipers or micrometer indicates only the maximum thickness, and (2) in the case of the hydrolyzed ion-exchange membrane, the measured thickness varies depending on whether the membrane is dry or swollen with water or an electrolyte, and even on the ionic species and ionic strength of the electrolyte, even though the amount of polymer remains constant. As the performance of a film or membrane is in part a function of the amount of polymer, the most convenient way to specify structural composition is as stated immediately above.

In the present disclosure, reference to the melt fabricable form of the polymer or film is to that form wherein the functional groups are $-SO_2X$ and/or $-COOR$, where X is F or Cl, and R is $C_1$ to $C_4$ alkyl. Reference to the ion exchange form of the polymer or film is to that form wherein the functional groups are $-SO_3M$ and/or $-COOM$, where M is H,

metal or $NQ_4$, said metal preferably being Na or K. The melt fabricable form is the starting material for the process of the invention.

The ion exchange polymers typically used in electrolysis membranes have poor notched tear properties. The membranes of this invention are strengthened by virtue of being extended or stretched and oriented to provide resistance to damage during installation and operation of the large sheets typically used in industrial size cells.

The oriented films can be made in different ways.

In the first aspect of the invention oriented film is made by extending its planar dimensions in the range of 1.3X to 2X by swelling it with a suitable liquid, followed by removing the liquid from the resulting liquid-swollen film while restraining the film from shrinkage in the planar directions as the liquid is removed. The type of liquid used is different from that of the prior art because the film is in the melt-fabricable form.

Since the film is in the melt-fabricable form, the liquid used for swelling the film should be a liquid organic compound having a boiling point of 20° to 300°C, consisting of C and F, or of C, F and at least one member of the group consisting of Cl, H, O, S and N, the sum of the number of Cl and H atoms being no greater than the number of F atoms. It is preferred that the number of F atoms be at least four times the sum of the number of Cl and H atoms, it is more preferred that there be no H atoms in the compound, and it is most preferred that there be no Cl and no H atoms in the compound. It is preferred that the boiling point be above 50°C, so that the film can be treated with the liquid at atmospheric pressure. Suitable such compounds include fluorocarbons, ethers, tertiary amines, and sulfonyl fluorides, any of which may or may not contain an olefinic bond. The compound should be non-reactive with the polymer. It is also preferred that such compound have volatility

sufficient to readily remove it below 180°C. Examples of such liquids include perfluoroheptane, perfluorodecane, perfluoro-(N-ethylmorpholine), perfluoro-(1-methyldecalin), perfluoro-(2-methyldecalin), perfluoro-(tri-n-butylamine), perfluoro-(3,6-dioxa-4-methyl-7-octenesulfonyl fluoride), 8H-perfluoro-(3,6-dioxa-4-methyloctanesulfonyl fluoride), and compounds of the formula

$$HCF_2CF_2(OCF_2\underset{CF_3}{CF})_p-O(CF_2)_qF$$

where p is 3 to 10 and q is 1 to 3. In the case of some partially fluorinated liquids, such as 1,2,2-trichloro-1,2,2-trifluoroethane, it may be necessary to use an autoclave to employ a swelling temperature above the boiling point of the liquid, or to stretch the film in combination with swelling as described below, or both.

This process avoids the use of swelling agents which may be flammable, toxic or intoxicating.

In this process, whether carried out on individual sheets of film or on long lengths of film in continuous manner, restraining the film from shrinking while removing the swelling liquid by drying is suitably carried out by securing the film to a tenter frame.

Since the film used in this process is a melt-fabricable film, it needs to be hydrolyzed to the ion-exchange form before use in an electrolysis cell. Upon hydrolysis, such film will shrink to some extent. It is therefore preferred to carry out hydrolysis of such film while restraining it from shrinking in the planar directions.

In a modification (the second aspect of the invention) of the process just described, the film is not only swollen by a liquid, but it is also stretched in at least one planar direction, such that the total extension of the starting film in the at least one planar direction due to both swelling and stretching is in the range of 1.3X to 3X, followed by removing the liquid from the resulting liquid-swollen and

stretched film while restraining the film from shrinking in the at least one planar direction. Stretching can be done at room temperature, or at elevated temperature, but not above the boiling point of the swelling liquid. Preferably the swollen film is stretched in two mutually perpendicular planar directions, and is also restrained in the two planar directions while the swelling liquid is removed. It should be understood that the term "mutually perpendicular" as employed herein not only embraces directions which are strictly perpendicular, but also directions which deviate from perpendicular by up to several degrees. Again, the type of liquid used will differ depending upon whether the film is in the melt fabricable or ion exchange form.

The liquid used for swelling the film should be a liquid organic compound as described hereinabove.

In this modification of the process, a suitable apparatus is a tenter frame operated so as to provide the total specified extension of 1.3X to 3X, and to restrain the film during drying. While this process does not avoid the use of a tenter frame, it makes the stretching step more tolerant of variations in temperature and/or stretch rate. When the oriented film produced by the process of the invention is a melt-fabricable film, it needs to be hydrolyzed to the ion-exchange form before use in an electrolysis cell. Upon hydrolysis, such film will shrink to some extent. It is therefore preferred to carry out hydrolysis of such film while restraining it from shrinking in the planar directions.

Drying of a swollen film ordinarily entails removing nearly all, i.e. at least 95%, or substantially all, i.e. at least 99%, of the liquid imbibed by the film.

The notation employed herein to indicate amount of stretch conforms to that used in the art, and is in reference to the starting dimension. Thus, a stretch of 2X indicates that a film is stretched to twice its original dimension and

1.5X indicates an extension of 50% of the original dimension.

As employed herein the term "extending" is intended to embrace both "stretching"., i.e. pulling by external forces, and "swelling", i.e. enlarging by internal forces associated with imbibing of liquid. Extending by stretching with external forces is sometimes referred to as tensile orientation.

Stretching of film is suitably carried out at a strain rate in each of the stretching directions in the range of about 100%/minute to about 20,000%/minute, preferably 200 to 5000%/minute.

Both extruded film and cast film are suitable for use in the orientation process of the invention. Cast film can be cast from a solvent solution, an aqueous dispersion, a non-aqueous dispersion, or a liquid composition of the type described in EP-A-0066369.

In those cases when stretching is monoaxial, it is preferred to restrain the film in the other, perpendicular planar direction so as to prevent neck-down of the film, and consequent waste.

Oriented film of the invention can be installed as dry film in a cell, and will stay taut in use, in contrast to unoriented film, which usually develops slack even if installed wet.

Oriented film of the invention has improved strength. It is stronger than unoriented film of equal thickness. It also has improved anion rejection properties as compared to unoriented film; it unexpectedly provided improved current efficiency when used as membrane in a chloralkali process, compared to unoriented film. It also has improved flatness.

Upon drying a solvent-swollen film, or a solvent-swollen and stretched film, while restraining it from shrinking, a change in morphology of the polymer film occurs, which change does not occur upon drying a solvent-swollen film without restraining it from shrinking. The change in morphology is

believed to be associated with the improved properties of the resulting oriented film.

Oriented film of the invention has a residual shrinkage of at least 0.1% in at least one planar direction, and preferably in at least two mutually perpendicular planar directions. Preferably the residual shrinkage is at least 0.5%, and more preferably is at least 1%.

For use in ion exchange applications and in cells, for example a chloralkali cell for electrolysis of brine, the membrane should have all of the functional groups converted to ionizable functional groups. Ordinarily and preferably these will be sulfonic acid and carboxylic acid groups, most preferably in the form of alkali metal salts thereof. Such conversion is ordinarily and conveniently accomplished by hydrolysis with base, such that the various functional groups described above in relation to the melt-fabricable polymers are converted respectively to the free acids or the alkali metal or ammonium salts thereof. Such hydrolysis can be carried out with an aqueous solution of an alkali metal hydroxide. Base hydrolysis is preferred as it is fast and complete. In the case of hydrolysis of carboxylate esters, acid hydrolysis as with a mineral acid can also be employed. Use of hot solutions, such as near the boiling point of the solution, is preferred for rapid hydrolysis. The time required for hydrolysis increases with the thickness of the structure. It is also of advantage to include a water-miscible organic compound such as dimethyl sulfoxide in the hydrolysis bath, to swell the membrane to increase the rate of hydrolysis. As indicated above, it is preferred to hold an oriented film under restraint while hydrolyzing it to prevent it from shrinking.

A principal use of the oriented ion exchange membrane produced by the process of the invention is in electrochemical cells. Such a cell comprises an anode, a compartment for the anode, a cathode, a compartment for the

cathode, and a membrane which is situated to separate the two said compartments. One example is a chloralkali cell, for which the membrane should have the functional groups in salt form; in such a cell, if the membrane has a layer which has carboxylic functional groups, that layer will be disposed toward the cathode compartment.

The electrochemical cell, especially a chloralkali cell, will ordinarily be constructed such that the gap or spacing between the anode and cathode is narrow, i.e. no greater than about 3 mm. It is also often advantageous to operate the cell and electrolysis process with the membrane in contact with either the anode or cathode, which can be accomplished with the aid of an appropriate hydraulic head in one cell compartment, or by using an open mesh or grid separator to urge the membrane and selected electrode into contact. It is often further advantageous for the membrane to be in contact with both the anode and cathode in an arrangement referred to as a zero-gap configuration. Such arrangements offer advantages in minimizing the resistance contributed by the anolyte and catholyte, and thus provide for operation at lower voltage. Whether or not such arrangements are used, either or both electrodes can have an appropriate catalytically active surface layer of type known in the art for lowering the overvoltage at an electrode.

The oriented film described herein can be modified on an outer surface thereof, especially the surface facing the cathode of a chloralkali cell, so as to have enhanced gas release properties, for example by providing optimum surface roughness, or, preferably, by providing thereon a gas- and liquid-permeable porous non-electrode layer. Such layer may function to facilitate release of hydrogen bubbles, and is sometimes referred to as a hydrogen bubble release layer, and can be attached, detached, or integral.

Such layer can be a non-electrode layer in the form of a thin hydrophilic coating and is ordinarily of an inert

electroinactive or non-electrocatalytic substance. Such non-electrode layer should have a porosity of 10 to 99%, preferably 30 to 70%, and an average pore diameter of 0.01 to 1000 μm, preferably 0.1 to 100 μm, and a thickness generally in the range of 0.1 to 500 μm, preferably 1 to 25 μm. A non-electrode layer ordinarily comprises an inorganic component and a binder; the inorganic component can be of a type as set forth in published GB-A-2,064,586, preferably tin oxide, titanium oxide, zirconium oxide, nickel oxide or an iron oxide such as $Fe_2O_3$ or $Fe_3O_4$. Other information regarding non-electrode layers on ion-exchange membranes is found in EP-A-31,660, and in JP-A-56-108888 and JP-A-56-112487.

Acceptable gas release properties on an outer surface of the membrane, especially the surface facing the cathode of a chloralkali cell, can alternatively be provided by optimizing the roughness of that surface. For best hydrogen release properties, the roughness should be in the range of about 0.5 to 5 μm (20 to 200 microinches). Such a roughened surface can be made by placing the precursor form of the membrane, i.e. that wherein the fluorinated polymer is still in a melt fabricable form, against a surface having the desired roughness, e.g. a release paper, an abrasive paper or a roughened metal roll, under heat and pressure. More information about suitable techniques can be found in US-A-4,323,434 and US-A-4,272,353.

A thin layer of asbestos paper placed in contact with the surface of the membrane which faces toward the cathode also functions as a hydrogen bubble release layer. The thickness of this layer can be 100-500 μm, preferably 200-300 μm.

An electrocatalyst on the outer surface of the first layer of the membrane can also function as a hydrogen bubble release layer to provide for good gas release properties. Such electrocatalyst can be of a type known in the art, such

as those described in US-A-4,224,121 and US-A-3,134,697, and published GB-A-2,009,788. Preferred cathodic electrocatalysts include platinum black, Raney nickel and ruthenium black.

The binder component in a non-electrode layer, or in an electrocatalyst composition layer, can be, for example, polytetrafluoroethylene; a fluorocarbon polymer, at least the surface of which is hydrophilic by virtue of treatment with ionizing radiation in air or a modifying agent to introduce functional groups such as -COOH or $-SO_3H$ (as described in GB-A-2,060,703), or treatment with an agent such as sodium in liquid ammonia; a functionally substituted fluorocarbon polymer or copolymer which has carboxylate or sulfonate functional groups; or polytetrafluoroethylene particles modified on their surfaces with fluorinated copolymer having acid type functional groups (GB-A-2,064,586). Such binder is suitably used in an amount of 10 to 50% by wt. of the non-electrode layer or of the electrocatalyst composition layer.

A non-electrode layer can be applied to a membrane by various techniques known in the art, which include preparation of a decal which is then pressed onto the membrane surface, application of a slurry in a liquid composition (e.g. dispersion or solution) of the binder followed by drying, screen or gravure printing of compositions in paste form, hot pressing of powders distributed on the membrane surface, and other methods as set forth in GB-A-2,064,586. Such structures can be made by applying the indicated layers onto membranes in melt-fabricable form, and by some of the methods onto membranes in ion-exchange form; the polymeric component of the resulting structures when in melt-fabricable form can be hydrolyzed in known manner to the ion-exchange form.

The following Example is provided to illustrate the invention.

Example

A 53 x 63 mm sample of a 178 μm (7 mils) thick film of a copolymer of $CF_2=CF_2$ and $CF_2=CFOCF_2CF(CF_3)OCF_2CF_2SO_2F$ having an equivalent weight of 1100, was boiled in $FCl_2CCClF_2$ for 10 minutes. The dimensions were 60 x 75 mm. To get increased swelling, the swelling agent was changed to perfluoro(N-ethyl morpholine). After soaking at room temperature, the dimensions were 68 x 81 mm. After boiling 15 minutes, the dimensions were 72 x 85 mm. The sample was clamped onto a steel plate with magnets and allowed to dry overnight. After removal from the clamps, the dimensions were 64 x 78 mm and the thickness was 114 μm, showing orientation had occurred by swelling followed by drying under restraint.

The oriented membrane of the invention is useful as a divider to separate the compartments of an electrochemical cell, such as solid polymer electrolyte cells, solar cells, electrolysis cells, batteries and fuel cells. It is especially useful for chloralkali electrolysis cells, where it provides for operation at low voltage and high current efficiency, and is strong and durable.

CLAIMS

1. A process for making an oriented film of at least one perfluorinated polymer which has $-SO_2X$ and/or $-COOY$ functional groups, where X is F, Cl or OM; Y is R or M; M is H, Na, K or $NQ_4$, each Q separately is H or $C_1$ to $C_4$ alkyl; and R is $C_1$ to $C_4$ alkyl, and which has an equivalent weight of 670 to 1500, said film having been simultaneously extended 1.3X to 2X in each of two mutually perpendicular directions, said process comprising (a) swelling a first film of at least one perfluorinated polymer which has $-SO_2X'$ and/or $-COOR$ functional groups, where X' is F or Cl and R is as hereinbefore defined, by contacting said first film with a liquid organic compound having a boiling point of $20^o$ to $300^oC$, consisting of C and F, or of C, F and at least one of Cl, H, O, S and N, the sum of the number of Cl and H atoms being no greater than the number of F atoms, until said first film has been extended in the range of 1.3X to 2X in each of two mutually perpendicular planar directions, (b) removing said organic liquid from the resulting liquid-swollen film while restraining the film from shrinking in said planar directions, and optionally (c) hydrolyzing the $-SO_2X'$ and/or $-COOR$ functional groups to $-SO_3M$ and/or $-COOM$ functional groups, wherein M is as hereinbefore defined, while restraining the film from shrinking in said planar directions.

2. A process for making an oriented film of at least one perfluorinated polymer which has $-SO_2X$ and/or $-COOY$ functional groups, where X is F, Cl or OM; Y is R or M; M is H, Na, K or $NQ_4$, each Q separately is H or $C_1$ to $C_4$ alkyl; and R is $C_1$ to $C_4$ alkyl, and which has an equivalent weight of 600 to 1500, said film having been extended 1.3X to 3X in at least one planar direction, said process comprising (a) swelling a first film of at least one perfluorinated polymer which has $-SO_2X'$ and/or $-COOR$ functional groups, where X' is F or Cl and R is as hereinbefore defined and an equivalent

weight of 600 to 1500, by soaking said film in a liquid organic compound as defined in claim 1 (b) stretching the resulting liquid-swollen film in at least one planar direction, the extension of said first film in said at least one planar direction in steps (a) and (b) taken together being 1.3X to 3X, (c) removing said organic liquid from said liquid-swollen and stretched film while restraining the film from shrinking in said at least one planar direction and optionally (d) hydrolyzing the $-SO_2X'$ and/or -COOR functional groups to $-SO_3M$ and/or -COOM functional groups, wherein M is as hereinbefore defined, while restraining the film from shrinking in said planar directions.

3. A process according to claim 1 wherein said stretching in step (b) and said restraining in step (c) are in two mutually perpendicular planar directions.

4. A process according to claim 1, 2 or 3 wherein said liquid organic compound contains no Cl and no H atoms.

5. A process according to any one of claims 1 to 4 wherein said first film is of a polymer which has $-SO_2F$ functional groups and an equivalent weight of 900 to 1400.

6. A process according to any one of claims 1 to 4 wherein said first film is of a polymer which has -COOR functional groups and an equivalent weight of 770 to 1250.

7. A process according to any one of claims 1 to 4 wherein said first film has a stratum of polymer which has $-SO_2F$ functional groups and an equivalent weight of 900 to 1400, and a stratum of polymer which has -COOR functional groups and an equivalent weight of 770 to 1250.

8. A process according to claim 6 or 7 wherein said -COOR functional groups are present in $-O(CF_2)_tCOOR$ moieties where t is 1, 2 or 3.

9. A process according to claim 2 wherein the oriented film after step (d) has a residual shrinkage in said at least one planar direction of at least 0.1%.

10. A process according to claim 1 wherein the oriented film

after step (c) has a residual shrinkage in each of said two mutually perpendicular planar directions of at least 0.1%.

11. A process according to claim 9 or 10 wherein said residual shrinkage is at least 0.5%.

12. A process according to claim 11 wherein said residual shrinkage is at least 1%.